## Europäisches Patentamt
## European Patent Office
## Office européen des brevets

(19)

(11) Veröffentlichungsnummer: **0 052 215**
**B1**

(12) # EUROPÄISCHE PATENTSCHRIFT

(45) Veröffentlichungstag der Patentschrift:
24.09.86

(51) Int. Cl.⁴: **G 01 F 23/26**

(21) Anmeldenummer: **81107909.4**

(22) Anmeldetag: **05.10.81**

(54) Einrichtung zur kapazitiven Füllstandsmessung.

(30) Priorität: **06.11.80 DE 3041914**

(43) Veröffentlichungstag der Anmeldung:
**26.05.82 Patentblatt 82/21**

(45) Bekanntmachung des Hinweises auf die Patenterteilung:
**24.09.86 Patentblatt 86/39**

(84) Benannte Vertragsstaaten:
**DE FR GB IT**

(56) Entgegenhaltungen:
**DE-A-1 960 648**
**DE-A-2 521 687**
**DE-A-2 908 449**
**DE-A-2 949 386**
**GB-A-2 034 051**

(73) Patentinhaber: **VDO Adolf Schindling AG,
Gräfstrasse 103, D-6000 Frankfurt/Main (DE)**

(72) Erfinder: **Berryman, Walter H., 34 Richardson Rd.,
Croydon Victoria (AU)**
Erfinder: **Manson, Peter John, Flat 1/42 Studley
Avenue, Kew 3101 (AU)**
Erfinder: **Hamley, Adrian Harold, 44 Country Club
Drive, Chirnside Park Victoria (AU)**
Erfinder: **Korb, Joseph, 25 Roma Street, North
Geelong Victoria (AU)**

(74) Vertreter: **Könekamp, Herbert, Dipl.- Ing., Sodener
Strasse 9, D-6231 Schwalbach (DE)**

EP 0 052 215 B1

LIBER, STOCKHOLM 1986

## Beschreibung

Die Erfindung betrifft eine Einrichtung zur kapazitiven Füllstandsmessung, insbesondere in einem Kraftfahrzeugtank, nach dem Oberbegriff des Anspruchs 1.

Bei einer derartig bekannten Einrichtung (DE-A-29 08 449) sind im einzelnen die Meßelektroden und die Kompensationselektroden an oder in einer langgestreckten gemeinsamen Leitung dergestalt abschnittsweise getrennt angeordnet, daß sich die Kompensationselektroden nahe bei mindestens einem Ansaugkanal für das Medium befinden und die Meßelektroden nahe bei dem zu messenden Medium sind. Speziell kann bei dieser bekannten Einrichtung die Leitung als rundes Kabel aus Kunststoff ausgebildet sein, in dem zwei konzentrische ringförmige Anordnungen von zueinander beabstandeten Elektroden als Leitungszüge eingelassen sind und in dem zwischen den Elektroden hohle Kammern ausgespart sind. Die Kammern zwischen den als Kompensationselektroden geschalteten Elektroden auf der inneren kreisförmigen Anordnung dienen als Saugkammern, während die Kammern zwischen den als Meßelektroden dienenden Elektroden auf der äußeren ringförmigen Anordnung mit dem zu messenden Medium kommunizieren.

Bei dieser Einrichtung ist nachteilig, daß die Meßelektroden und die Kompensationselektroden in der Leitung nicht mehr ohne weiteres zugänglich sind, um bestimmte Meßkennlinien einzustellen. Hinsichtlich der Kompensation der dielektrischen Eigenschaften des zu messenden Mediums, die mit den Kompensationselektroden erreicht werden soll, können unter bestimmten Umständen Ausfallerscheinungen auftreten, wenn das Medium bei fehlendem Saugdruck in dem Ansaugkanal zurückströmt, d.h. der Ansaugkanal nicht mit dem Medium gefüllt ist.

Es ist des weiteren eine Füllstandsmeßeinrichtung bekannt (DE-A-29 49 386), bei der das Fühlsystem aus einem Rohr oder einem Stab aus elektrisch leitendem Material besteht, das mit einem Isolierstoffüberzug versehen ist. Dieser Stab, der mit einer konzentrischen, leitenden Erd-Rückführungshülle umgeben sein kann, bildet zusammen mit der Wand des Flüssigkeitsbehälters einen elektrischen Kondensator, dessen Kapazität sich abhängig vom Flüssigkeitsniveau ändert.

Zu der vorliegenden Erfindung gehört daher die Aufgabe, eine Einrichtung zur kapazitiven Füllstandsmessung der eingangs genannten Gattung derart weiterzubilden, daß die Meßelektroden und die Kompensationselektroden vor dem Zusammenbau der Einrichtung und der Montage, beispielsweise in einem Kraftfahrzeugtank, gut zugänglich sind, und bei der eine Gewähr dafür geboten werden kann, daß die Kompensation der dielektrischen Eigenschaften des Mediums durch Eintauchen der Kompensationselektroden in dieses Medium auch bei ungünstigen Betriebsbedingungen, insbesondere Wegfall des Saugdrucks in dem Ansaugtrakt, mittels der Auswertelektronik erfolgen kann. Diese Einrichtung soll außerdem fertigungstechnisch wenig aufwendig sein und sich in praktisch beliebigen Tanks ohne nennenswerte Veränderungen des Tanks einsetzen lassen.

Diese Aufgabe wird durch die Ausgestaltung der Einrichtung zur kapazitiven Füllstandsmessung mit den im kennzeichnenden Teil des Anspruchs 1 angegebenen Merkmalen gelöst.

Dadurch, daß die Kompensationselektroden in dem Sumpfgefäß untergebracht sind, dessen Boden tiefer als eine obere Öffnung des durch eine innere rohrförmige Elektrode gebildeten Kanals liegt und das über einen Überlauf mit dem Kanal in flüssigkeitsleitender Verbindung steht, wird gewährleistet, daß die Kompensationselektroden ständig in das zu messende Medium eingetaucht sind, und zwar auch dann, wenn das Medium nicht gefördert wird. Durch das mit dem Sumpfgefäß in Verbindung stehende Ansaugrohr, mit dem das Medium aus dem Sumpfgefäß abgesaugt wird und des bis an den Boden des Sumpfgefäßes heranreicht, wird dafür gesorgt, daß sich Schmutzteilchen oder Kondenswasser nicht in erheblichem Maße innerhalb des Sumpfgefäßes ansammeln können, wodurch die Messung verfälscht würde. Vielmehr werden diese Schmutzteilchen bzw. das Wasser sofort mit dem eigentlichen Medium abgesaugt. Durch die Unterbringung der Kompensationselektroden in dem Sumpfgefäß können diese von außen gut zugänglich ausgebildet werden, da sie nach Einbau in das Sumpfgefäß geschützt sind.

In einer Weiterbildung der Einrichtung ist vorgesehen, daß in das Absaugrohr eine Entlüftungsleitung mündet, die bis zu dem Niveau des Mediums in dem Sumpfgefäß herabreicht.

Diese Entlüftungsleitung bietet eine Gewähr dagegen, daß sich oberhalb des Bodens des Sumpfgefäßes eine Gasblase bildet, die ein weiteres Ansaugen des Mediums durch das Saugrohr verhindert. Durch die Anordnung der Entlüftungsleitung kann das Niveau des Mediums bis zu dessen Eintrittsöffnung in dem Sumpfgefäß steigen.

Zur möglichst vollständigen sofortigen Entfernung von Schmutzteilchen oder Wasser aus dem Sumpfgefäß ist bei einer weiteren vorteilhaften Ausbildung der Boden des Sumpfgefäßes zu der Öffnung des Ansaugrohrs hin geneigt.

Dadurch fließen die in der Regel schwereren Schmutz- und Wasserteilchen zu der Eingangsöffnung des Saugrohrs hinab, durch die sie abgesaugt werden.

Die Meßelektroden können montagegünstig einstückig mit dem Sumpfgefäß gemäß Anspruch 4 verbunden werden, so daß die Meßelektroden zusammen mit dem Sumpfgefäß in einem Arbeitsgang in einen Tank einsetzbar sind. Zuvor lassen sich die Elektroden, die nach unten herausragen und z.B seitlich am Sumpfgefäß angeordnet sind, verhältnismäßig gut einstellen und justieren In einer weiteren vorteilhaften Ausführung ist das Sumpfgefäß mit einem ebenfalls aus Kunststoff bestehenden Deckel abschließbar, aus dem das Abssugrohr und gegebenenfalls die Entlüftungsleitung in fertigungsgünstiger Weise ausgeformt sind. Der Deckel kann durch Ultraschallschweißen oder durch Verkleben mit dem Sumpfgefäß verbunden werden.

Zur besseren Halterung der rohrförmigen Meßelektroden sind diese zweckmäßig an ihrem unteren Ende durch einen zylindrischen Filter konzentrisch zueinander gehalten. Dadurch läßt sich die gewünschte Konfiguration der Meßelektroden auch bei Erschütterungen des Tanks, in dem sie untergebracht sind, beibehalten. Der Filter hat also eine Doppelfunktion, nämlich erstens die Filterung des angesaugten Mediums mit einer äußeren siebförmigen Wand, die aus Kunststoff bestehen kann und zweitens die Halterung der inneren röhrenförmigen Meßelektrode mittels eines einstückig aus dem Filter ausgeformten Innenzylinders, der unten das Ende der äußeren röhrenförmigen Meßelektrode umfaßt und bis zur inneren Meßelektrode heranreicht.

In einer weiteren zweckmäßigen Ausführung ist in einem im wesentlichen geschlossenen Innenzylinder des Filters eine Drosselöffnung vorgesehen, über welche der Zwischenraum zwischen den Meßelektroden mit dem Filterinnenraum verbunden ist. Diese Drosselöffnung dient zur Dämpfung der Bewegung des zu messenden Mediums in dem Zwischenra und gewährleistet eine entsprechende ruhige Anzeige des Füllstands auch bei Bewegung des Tanks, in dem die Einrichtung untergebracht ist, ohne zusätzliche Dämpfungsmittel.

Weiterhin ist eine Ausbildung der Einrichtung besonders fertigungsgünstig und montagegünstig, bei der eine Auswertelektronik unterhalb des Deckels in dem Sumpfgefäß angeordnet ist und über lösbare Kontakte an die Meßelektroden und an die Kompensationselektroden angeschlossen ist.

In diesem Fall kann über nur wenige - z.B drei-Kontaktstreifen, die an dem Sumpfgefäß angeordnet sind, die Stromversorgung der Auswertelektronik und der Anschluß der Elektronik an ein Anzeigeinstrument oder dergleichen erfolgen.

Die Auswertelektronik kann im einzelnen nach den Ansprüchen 9 oder 10 vorteilhaft in der Weise ausgebildet sein, daß nicht nur eine Kompensation der dielektrischen Eigenschaften des Mediums erfolgt, sondern daß außerdem ein wenig aufwendiger Abgleich bei leerem Tank - Leerstellung - und bei vollem Tank - Vollstellung - durchgeführt werden kann. Durch den Einsatz von Differenzverstärkern ist die Auswertelektronik gegen Störgrößeneinflüsse, insbesondere Schwankungen der Versorgungsspannung und Temperaturänderungen weitgehend unempfindlich.

Weitere Merkmale und Vorteile der erfindungsgemäßen Einrichtung ergeben sich aus der nachfolgenden Beschreibung. In ihr ist die erfindungsgemäße Einrichtung mit zwei Varianten der Auswertelektronik in vier Figuren beschrieben.

Es zeigt:

Figur 1 das Sumpfgefäß mit den angebrachten Meßelektroden und Kompensationselektroden und mit Deckel in einem Längsschnitt,

Figur 2 das Sumpfgefäß in einem Querschnitt entlang der Linie A-A in Figur 1,

Figur 3 eine erste Ausführungsform der Auswertelektronik und

Figur 4 eine zweite Ausführungsform der Auswertelektronik.

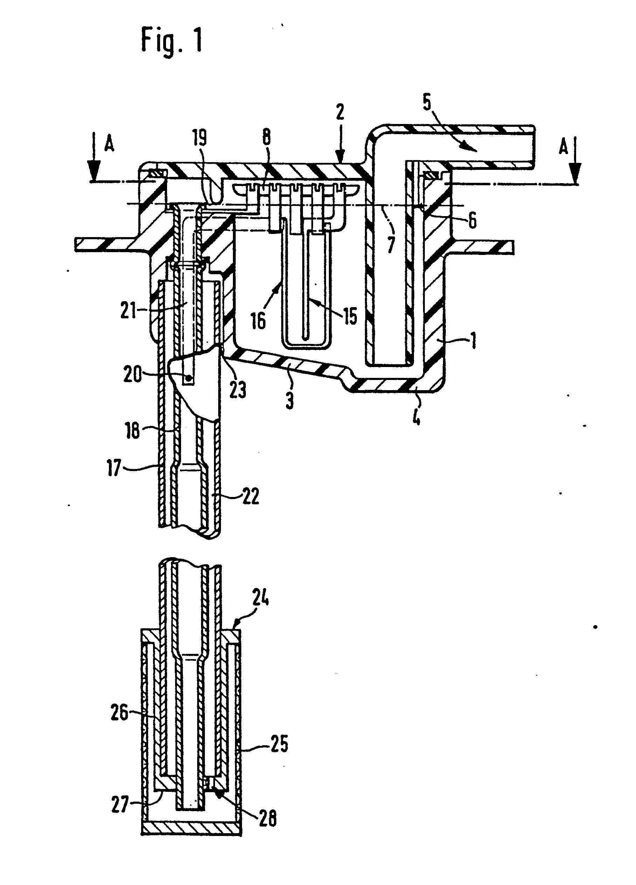

In Figur 1 ist mit 1 ein aus Kunststoff geformtes Sumpfgefäß bezeichnet, das oben mit einem Deckel 2 abgeschlossen ist, der ebenfalls aus Kunststoff besteht. Beide Teile können im Spritzgußverfahren hergestellt sein.

Der Boden 3 des Sumpfgefäßes verläuft geneigt bis zu einer tiefsten Stelle 4.

Oberhalb der tiefsten Stelle 4 des Bodens ist aus dem Deckel ein Saugrohr 5 ausgeformt, das dicht bis an die tiefste Stelle heranreicht. In das Saugrohr mündet eine Entlüftungsleitung 6, und zwar reicht die untere Öffnung der Entlüftungsleitung 6 bis zu dem Niveau des zu messenden Mediums, insbesondere Benzin.

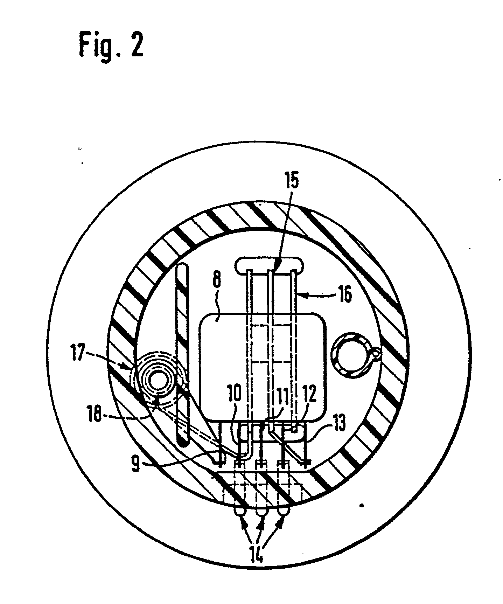

In dem Sumpfgefäß ist ferner eine gas- und flüssigkeitsdicht gekapselte Auswertelektronik 8 angeordnet, die über lösbare Kontakte 9 bis 13 sowohl mit den Kompensations- und Meßelektroden als auch mit Elektrodenstreifen (14, Fig. 2) in Verbindung steht, die aus dem Inneren des Sumpfgefäßes zum Anschluß der Auswertelektronik an die äußere Stromquelle und ein Anzeigeinstrument herausgeführt sind. Wie ersichtlich, befindet sich die Auswertelektronik 8 oberhalb des maximalen Medienniveaus.

In dem Sumpfgefäß sind Kompensationselektroden 15 und 16 in Schlitze eingesetzt, die insbesondere aus Figur 2 am oberen Ende der Kompensationselektroden ersichtlich sind aber nicht bezeichnet sind. Die Kompensationselektroden bestehen aus plattiertem Stahl, und zwar die innere Kompensationselektrode 15 aus einem Stahlstreifen, der von der annähernd U-förmig gebogen äußeren Kompensationselektrode 16 teilweise eingeschlossen wird. Die Kompensationselektroden befinden sich völlig unterhalb des Niveaus 7 der Flüssigkeit.

Aus dem Sumpfgefäß 1 ragen zwei röhrenförmige konzentrisch angeordnete Meßelektroden 17 und 18 nach unten, die zum Eintauchen in einen Tank vorgesehen sind. Die äußere Meßelektrode ist mit 17 bezeichnet und die innere Meßelektrode mit 18. Die innere röhrenförmige Meßelektrode dient zum Ansaugen der Flüssigkeit und transportiert diese von dem Boden des nicht dargestellten Tanks über einen Überlauf 19 in das Innere des Sumpfgefäßes. Beide Meßelektroden sind in den Sumpfgefäßbehälter eingepreßt. Die innere Meßelektrode 18 ist zusätzlich durch einen O-Ring abgedichtet und nach außen erweitert, um sicher gehalten zu werden. Das in das Sumpfgefäß eingepreßte Ende der Meßelektrode 18 dient zusätzlich als elektrischer Kontakt zur Auswertelektronik 8. Der Kontakt wird gleichzeitig mit dem Einpressen hergestellt. Die äußere Meßelektrode 17 wird durch eine Schweißverbindung bei 20 an einem mit einem der Kontaktstreifen 14 verbundenen Metallstreifen 21 gehalten. Der zwischen den Meßelektroden gebildete Zwischenraum 22 kann durch Entlüftungsöffnungen 23 an dem Sumpfgefäß entlüftet werden. Die Durchmesser beider Meßelektroden können über ihre Länge variabel gestaltet sein, um eine gewünschte Kennlinie der Füllstandsmessung zu ermöglichen.

An ihrem unteren Ende sind beide Meßelektroden durch einen Filter 24 zentriert, welcher eine äußere siebförmige Wand 25 und einen Innenzylinder 28 aufweist, der in einen eine Drosselöffnung 28 aufweisenden Boden 27 mündet. Die Größe der Drosselöffnung bestimmt die Veränderungsgeschwindigkeit, mit der das Flüssigkeitsniveau innerhalb des Zwischenraums 22 variieren kann. Anstelle einer Dämpfung des Ausgangssignals auf Grund der Wirkung der Drosselöffnung 28 kann auch eine elektronische Dämpfung in der Auswertelektronik 8 vorgesehen werden, wobei dann die Öffnung 28 so groß gemacht wird, daß die Flüssigkeit verzögerungsfrei durchtreten kann. Durch die siebförmige Wand 25 werden Schmutzteilchen weitgehend aus dem Inneren der Meßelektroden und aus dem Sumpfgefäß herausgehalten, die Verfälschungen der Messungen ergeben könnten. Von den verbleibenden Schmutzteilchen, die in den Filter eindringen, werden die meisten durch das Innere der inneren Meßelektrode abgesaugt, so daß sie sich nicht in dem Zwischenraum 22 ansammeln können.

Zu der äußeren Kompensationselektrode 16 wird noch bemerkt, daß diese über ungefähr ihre halbe Länge mit Schlitzen versehen sein kann, um den Spalt zwischen ihr und der Kompensationselektrode 15 zur Eichung bequem ändern zu können.

Im Betrieb der Einrichtung wird durch das Saugrohr 5 und die Entlüftungaleitung 6 aus dem Inneren des Sumpfgefäßes Flüssigkeit in einem Verhältnis der Durchmesser des Saugrohrs und der Entlüftungsleitung abgesaugt.

Durch die Anordnung der Entlüftungsleitung 6 ist in besonders vorteilhafter Weise dafür gesorgt, daß bei einer Entleerung der sich an das Saugrohr 5 anschließenden Flüssigkeitsleitung das Sumpfgefäß nur bis zu dem Niveau 7 entleert, so daß die Vergleichselektroden eingetaucht bleiben. Dieses Niveau stimmt mit der oberen Öffnung der inneren Meßelektrode überein. Das Niveau 7 in dem Sumpfgefäß bleibt auch dann erhalten, wenn unter der Einwirkung des Gasdrucks der Flüssigkeit diese in der inneren Meßelektrode heruntergedrückt wird.

Mit der erfindungsgemäßen Einrichtung wird der Scheinwiderstand des Kondensators, der aus den Vergleichselektroden gebildet wird, in Beziehung gesetzt mit dem Scheinwiderstand des Kondensators, der mit den Meßelektroden gebildet wird. Diese Kondensatoren werden im folgenden als Meßkondensator und Vergleichskondensator bezeichnet. Der Scheinwiderstand des Meßkondensators wird durch das Niveau des Mediums in dem Tank bestimmt, außerdem aber auch durch die dielektrischen Eigenschaften der Flüssigkeit, die jedoch durch den ständig in der Flüssigkeit eingetauchten Vergleichskondensator kompensiert werden.

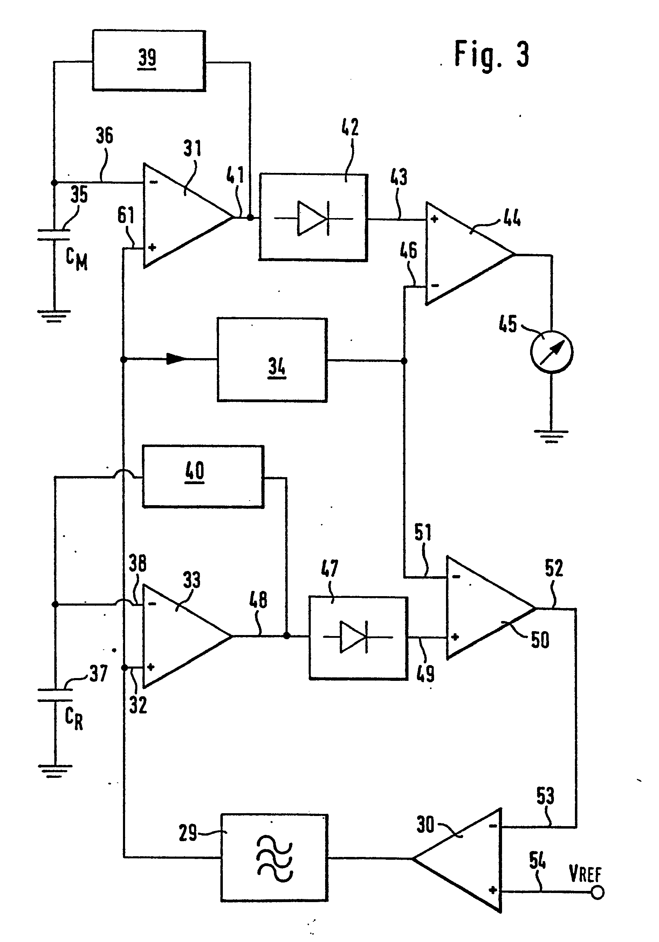

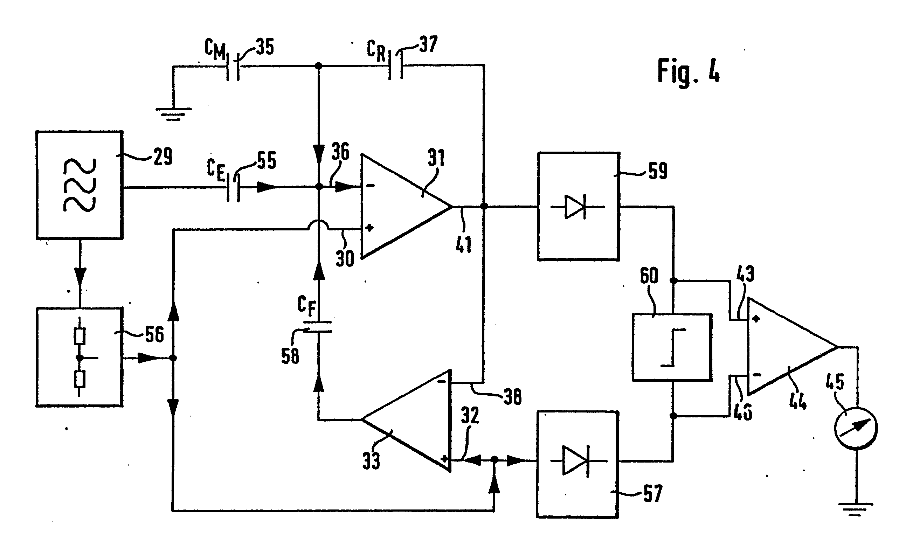

Zwei Ausführungsformen der Auswertelektronik sind in den Figuren 3 und 4 dargestellt:

Die Auswertschaltung in Figur 3 umfaßt einen Oszillator 29, dessen Amplitude durch einen Rückkopplungsverstärker 30 gesteuert wird. Ein Ausgang dieses Oszillators ist an den nichtinvertierenden Eingang 61 eines Meßverstärkers 31 angeschlossen und an einen nichtinvertierenden Eingang 32 eines Vergleichsverstärkers 33. Schließlich ist der Ausgang des Oszillators zu einem Eingang einer Schaltungsanordnung 34 geführt, die die Auswertelektronik 8 auf den leeren Tank abgleicht. Der aus den Meßelektroden gebildete Meßkondensator 35 verbindet einen invertierenden Eingang 36 des Meßverstärkers 31 mit dem Erdpotential. Der aus den Kompensationselektroden gebildete Vergleichskondensator 37 verbindet einen invertierenden Eingang 38 des Vergleichsverstärkers 33 mit dem Erdpotential.

Sowohl der Meßverstärker 31 als auch der Vergleichsverstärker 33 sind rückgekoppelt, und zwar über eine Meßrückkopplung 39 zu dem invertierenden Eingang 36 bzw. über eine Vergleichsrückkopplung 40 zu dem invertierenden Eingang 38.

Ein Ausgang 41 des Meßverstärkers ist ferner über einen Meßspitzendetektor 42 mit einem nichtinvertierenden Eingang 43 eines Ausgangsverstärkers 44 verbunden, an dessen Ausgang ein Anzeigeinstrument 45 angeschlossen ist. An den invertierenden Eingang 46 des Ausgangsverstärkers 44 ist ein Ausgang der Schaltungsanordnung 34 geführt.

Ein Vergleichs-Spitzendetektor 47 verbindet einen Ausgang 48 des Vergleichsverstärkers mit einem nichtinvertierenden Eingang 49 eines Differenzverstärkers 50, dessen invertierender Eingang 51 ebenfalls mit dem Ausgang der Schaltungsanordnung 34 verbunden ist.

Zur Steuerung des Oszillators 29 ist ein Ausgang 52 des Differenzverstärkers 50 mit einem invertierenden Eingang 53 des Rückkopplungsverstärkers 30 verbunden, dessen

nichtinvertierender Eingang 54 auf dem Pegel einer Referenzspannung gehalten wird.

Mit dieser Schaltung wird unabhängig von den dielektrischen Eigenschaften der Flüssigkeit, deren Niveau in dem Tank zu messen ist, der Flüssigkeitsstand in dem Tank ermittelt. Die Schaltungsanordnung 34 dient dabei dazu, das Anzeigeinstrument auf einen vorgegebenen Wert bei leerem Tank bzw. niedrigstem Flüssigkeitsniveau einzustellen.

Grundsätzlich die gleiche Funktion hat auch die Auswertelektronik gemäß Figur 4, in der gleiche Teile mit übereinstimmenden Bezugszeichen versehen sind:

In der Auswertelektronik gemäß Figur 4 ist der Oszillator 29 über einen Kompensationskondensator für die Leerstellung 55 mit dem invertierenden Eingang 36 des Meßverstärkers 31 und außerdem über einen Spannungsteiler 56 mit dem nichtinvertierenden Eingang 30 des Meßverstärkers 31 sowie dem nichtinvertierenden Eingang 32 des Vergleichsverstärkers 33 und einem Spitzendetektor 57 verbunden.

Der invertierende Eingang 36 des Meßverstärkers 31 steht außerdem über einen Kondensator 58, der zum Abgleich der Auswertelektronik 8 auf den vollen Tank dient, mit dem Ausgang des Vergleichsverstärkers 33 sowie über den Meßkondensator 35 mit Erdpotential und über den Kompensationskondensator 37 mit seinem eigenen Ausgang 41 in Verbindung.

Der Ausgang 41 des Meßverstärkers steht über den Spitzendetektor 59 mit dem nichtinvertierenden Eingang 43 des Differenzverstärkers 44 und außerdem mit einem Eingang eines Begrenzers 60 in Verbindung. In ähnlicher Weise ist der Ausgang des Spitzendetektors 57 mit dem invertierenden Eingang 46 des Differenzverstärkers 44 und einem zweiten Eingang des Begrenzers 60 verbunden.

Bei dieser Schaltungsanordnung wird in dem Differenzverstärker wiederum ein Meßwert gebildet, der dem tatsächlichen Niveau der Flüssigkeit in dem Tank unabhängig von den dielektrischen Eigenschaften entspricht, welche hier im wesentlichen mit dem über den Kompensationskondensator rückgekoppelten Meßverstärker kompensiert werden.

**Patentansprüche**

1. Einrichtung zur kapazitiven Füllstandsmessung, insbesondere in einem Kraftfahrzeugtank, mit einem Meßfühler mit einen Meßkondenator (35) bildenden Meßelektroden (17, 18) deren Zwischenraum mit dem Medium, dessen vorliegende Füllhöhe gemessen werden soll, kommuniziert, mit einem Kanal innerhalb des Meßfühlers zum Hochsaugen des Mediums sowie mit Kompensationselektroden (15, 16) zur Bildung eines Kompensationskondensators (37) in einem Ansaugtrakt mit konstantem Niveau des Mediums, wobei mittels der Kompensationselektroden (15, 16) der Einfluß unterschiedlicher Dielektrizitätskonstanten des Mediums auf das Meßergebnis in einer Auswerteschaltung, an die der Meßkondensator (35) und der Kompensationskondensator (37) angeschlossen sind, kompensierbar ist, dadurch gekennzeichnet, daß die den Meßkondensator (35) bildenden Meßelektroden (17, 18) konzentrisch zueinander angeordnet sind, daß der Kanal zum Hochsaugen des Mediums innerhalb der inneren Meßelektrode (18) liegt, daß die Kompensationselektroden (15, 16) in einem Sumpfgefäß (1) untergebracht sind, dessen Boden (3) tiefer als die obere Öffnung des innerhalb der inneren Meßelektrode (18) angeordneten Kanals liegt und das über einen Überlauf (19) mit dem Kanal in flüssigkeitsleitender Verbindung steht, und daß ein Absaugrohr (5) für das Medium in den Bodenbereich des Sumpfgefäßes (1) reicht.

2. Einrichtung nach Anspruch 1, dadurch gekennzeichnet, daß in das Absaugrohr (5) eine Entlüftungsleitung (6) mündet, die bis zu dem Niveau (7) des Mediums in dem Sumpfgefäß herabreicht.

3. Einrichtung nach Anspruch 1 oder 2, dadurch gekennzeichnet, daß der Boden (3) des Sumpfgefäßes zu der Öffnung des Ansaugrohrs (5) hin abschüssig geneigt ist.

4. Einrichtung nach einem der Ansprüche 1 bis 3, dadurch gekennzeichnet, daß in dem aus Kunststoff bestehenden Sumpfgefäß (1) die Meßelektroden (17, 18) nach außen herausragend angebracht sind.

5. Einrichtung nach einem der Ansprüche 1 bis 4, dadurch gekennzeichnet, daß das Sumpfgefäß (1) mit einem ebenfalls aus Kunststoff bestehenden Deckel (2) abschließbar ist, aus dem das Absaugrohr (5) und gegebenenfalls die Entlüftungsleitung (6) ausgeformt sind.

6. Einrichtung nach einem der Ansprüche 1 bis 5, dadurch gekennzeichnet, daß die Meßelektroden (17, 18) an ihrem unteren Ende durch einen zylindrischen Filter (24) konzentrisch zueinander gehalten sind.

7. Einrichtung nach Anspruch 6, dadurch gekennzeichnet, daß in einem im wesentlichen geschlossenen Innenzylinder (26) des Filters (24) eine Drosselöffnung (28) vorgesehen ist, über welche der Zwischenraum (22) zwischen den Meßelektroden (17, 18) mit dem Filterinnenraum verbunden ist.

8. Einrichtung nach einem der Ansprüche 1 bis 7, dadurch gekennzeichnet, daß die Auswerteschaltung in Form einer Auswertelektronik (8) vorliegt und unterhalb des Deckels (2) in dem Sumpfgefäß (1) angeordnet ist und über lösbare Kontakte (9 bis 13) an die Meßelektroden (17, 18) und an die Kompensationselektroden (15, 16) angeschlossen ist.

9. Einrichtung nach einem der Ansprüche 1 bis 8, bei dem die Auswertelektronik (8) einen rückgekoppelten Differenzverstärker als Meßverstärker (31) mit dem Meßkondensator (35) an einem Eingang, einen rückgekoppelten Differenzverstärker als Vergleichsverstärker (33) mit dem Kompensationskondensator (37) an einem Eingang, einen mit einem Ausgang des Meßverstärkers (31) in Verbindung stehenden dritten Differenzverstärker (44) zum Speisen eines Anzeigeinstrumtes (45) sowie einen Oszillator (29) zum Speisen je eines Eingangs des Meßverstärkers (31) und des Vergleichsverstärkers (33) aufweist, dadurch gekennzeichnet,· daß je ein erster Eingang (61 bzw. 32) des Meßverstärkers (31) und des Vergleichsverstärkers (33) unmittelbar an den Oszillator (29) angeschlossen ist, daß ein zweiter Eingang (36) des Meßverstärkers (31) mit dem Meßkondensator (35) und einem am Ausgang (41) des Meßverstärkers (31) angeschlossenen Meßrückkopplungselement (39) verbunden ist, daß ein zweiter Eingang (38) des Vergleichsverstärkers (33) mit dem Kompensationskondensàtor (37) und einem am Ausgang (48) des Vergleichsverstärkers (33) angeschlossenen Vergleichsrückkopplungselement (40) verbunden ist, daß der Ausgang (48) des Vergleichsverstärkers mit einem ersten Eingang (49) eines vierten Differenzverstärkers (50) in Verbindung steht, der in einem zu einem Steuereingang des Oszillators (29) führender Rückkopplungszweig angeordnet ist, daß der Oszillator (29) eine Schaltungsanordung (34) zum Abgleich der Auswerteelektronik auf den leeren Tank speist, deren Ausgang zu je einem zweiten Eingang (46 bzw. 51) des dritten und des vierten Differenzverstärkers (44 bzw. 50) geführt ist.

10. Einrichtung nach einem der Ansprüche 1 bis 8, bei der die Auswertelektronik (8) einen rückgekoppelten Differenzverstärker als Meßverstärker (31) mit dem Meßkondensator (35) an einem Eingang, einen rückgekoppelten Differenzverstärker als Vergleichsverstärker (33), einen dritten Differenzverstärker (44), von dem ein erster Eingang (43) mit dem Meßverstärker (31) in Verbindung steht und der ein Anzeigeinstrument (45) sowie einen Oszillator (29) zum Speisen eines Eingangs des Meßverstärkers (31) aufweist, dadurch gekennzeichnet, daß der Oszillator (29) über einen dem Abgleich der Auswertelektronik (8) auf den leeren Tank dienenden Kompensationskondensator (55) mit einem ersten Eingang (36) des Meßverstärkers (31) verbunden ist, der über den Meßkondensator (35) geerdet ist und über den Vergleichskondensator (3) rückgekoppelt ist, daß ein erster Eingang (32) des Vergleichsverstärkers (33) über einen Spannungsteiler (56) an den Oszillator (29) angeschlossen ist und ein zweiter Eingang (38) des Vergleichsverstärkers (33) an dem Ausgang (41) des Meßverstärkers (31) angeschlossen ist, daß der Ausgang des Vergleichverstärkers (33) über einen dem Abgleich der Auswertelektronik (8) auf den vollen Tank dienenden Kompensationskondensator (58) an den ersten Eingang (36) des Meßverstärkers (31) angeschlossen ist und daß ein zweiter Eingang (46) des dritten Differenzverstärkers (44) ebenfalls mit dem Oszillator (29) in Verbindung steht.

11. Einrichtung nach Anspruch 9 dadurch gekennzeichnet, daß der Ausgang (41) des Meßverstärkers (31) und der (48) des Vergleichsverstärkers (33) über je einen Spitzendetektor (42, 47) an die nachgeschalteten Elemente der Auswertelektronik (8) angeschlossen sind.

12. Einrichtung nach Anspruch 10, dadurch gekennzeichnet, daß der Ausgang (41) des Meßverstärkers (31) und der Abgriff des Spannungsteilers (56) über je einen Spitzendetektor (59, 57) jeweils mit einem der Eingänge (43, 46) des dritten Differenzverstärkers (44) verbunden ist.


**Claims**

1. Apparatus for capacitive liquid level measurement, especially in a motor vehicle tank, with a measuring sensor having measuring electrodes (17, 18) which form a measuring capacitor (35) and the intermediate space between which communicates with the medium whose current level is to be measured, with a duct within the measuring sensor for aspirating the medium upwardly, and also with compensation electrodes (15, 16) for forming a compensation capacitor (37) in a suction run with constant level of medium, it being possible to compensate by means of the compensation electrodes (15, 16) for the influence of different dielectric constants of the medium on the measurement result in an evaluation circuit to which the measuring capacitor (35) and the compensation capacitor (37) are connected, characterised in that the measuring electrodes (17, 18) forming the measuring capacitor (35) are arranged concentrically with respect to one another, that the duct for aspirating the medium upwards is situated within the inner measuring electrode (18), that the compensation electrodes (15, 16) are arranged in a sump vessel (1) the bottom (3) of which is situated lower than the upper opening of the duct situated within the inner measuring electrode (18), and in communication via an overflow (19) with the duct in such manner as to be capable of conducting liquid, and that a pipe (5) for the removal of the medium by suction extends into the bottom region of the sump vessel (1).

2. Apparatus according to claim 1, characterised in that a venting conduit (6) which extends down to the level (7) of the medium in the sump vessel opens into the suction removal pipe (5).

3. Apparatus according to claim 1 or 2, characterised in that the bottom (3) of the sump vessel is inclined to slope downwardly towards the opening of the suction pipe (5).

4. Apparatus according to one of claims 1 to 3, characterised in that the measuring electrodes (17, 18) are arranged in the synthetic plastic material sump vessel (1) so as to project to the exterior.

5. Apparatus according to one of claims 1 to 4, characterise in that the sump vessel (1) is adapted to be closed with a cover (2) which is also made of synthetic plastic material and from which the suction removal pipe (5) and the venting conduit (6) if appropriate are formed.

6. Apparatus according to one of claims 1 to 5, characterised in that the measuring electrodes (17, 18) are held concentrically with one another at their lower end by a cylindrical filter (24).

7. Apparatus according to claim 6, characterised in that there is provided in the substantially closed inner cylinder (26) of the filter (24) a throttling opening (28) by means of which the intermediate space (22) between the measuring electrodes (17, 18) is connected with the filter interior space.

8. Apparatus according to one of claims 1 to 7, characterised in that the evaluation circuit provided is in the form of evaluating electronics (8) and is situated below the cover (2) in the sump vessel (1) and is connected by way of releasable contacts (9 to 13) to the measuring electrodes (17, 18) and to the compensation electrodes (15, 16).

9. Apparatus according to one of claims 1 to 8, wherein the evaluating electronics (8) comprise a differential amplifier with feedback as a measuring amplifier (31) with the measuring capacitor (35) at one input, also a differential amplifier with feedback as a comparison amplifier (33) with the compensation capacitor (37) at one input, also a third differential amplifier (44) for supplying an indicating instrument (45), said third differential amplifier being connected to an output of the measuring amplifier (31), and also an oscillator (29) for supplying one input each of the measuring amplifier (31) and of the comparison amplifier (33), characterised in that a first input (61 and 32 respectively) of each of the measuring amplifier (31) and of the comparison amplifier (33) is connected directly to the oscillator (28), that a second input (36) of the measuring amplifier (31) is connected to the measuring capacitor (35) and to a measuring feedback element (38) connected to the output (41) of the measuring amplifier (31), that a second input (38) of the comparison amplifier (33) is connected to the compensation capacitor (37) and to a comparison feedback element (40) connected to the output (48) of the comparison amplifier (33), that the output (48) of the comparison amplifier is connected-to a first input (48) of a fourth differential amplifier (50) which is arranged in a feedback branch leading to a control input of the oscillator (29), that the oscillator (29) supplies a circuit arrangement (34) for adjusting the evaluating electronics to the empty tank, the output of said arrangement leading to a second input (46 and 51 respectively) in each case of the third and fourth differential amplifiers (44, 50 respectively).

10. Apparatus according to one of claims 1 to 8, wherein the evaluating electronics (8) comprise a differential amplifier with feedback as a measuring amplifier (31) with the measuring capacitor (35) at one input, also a differential amplifier with feedback as a comparison amplifier (33), a third differential amplifier (44) a first input (43) of which is connected to the measuring amplifier (31) and which supplies an indicating instrument (45), also an oscillator (29) for supplying an input of the measuring amplifier (31), characterised in that the oscillator (29) is connected, via a compensation capacitor (55) serving to adjust the evaluating electronics (8) to the empty tank, to a first input (36) of the measuring amplifier (31) which is earthed via the measuring capacitor (35) and is connected with feedback by way of the comparison capacitor (37), that a first input (32) of the comparison amplifier (33) is connected via a voltage divider (56) to the oscillator (29), and a second input (38) of the comparison amplifier (33) is connected to the output(41) of the measuring amplifier (31), that the output of the comparison amplifier (33) is connected to the first input (36) of the measuring amplifier (31) by way of a compensation capacitor (58) serving for adjusting the evaluating electronics (8) to the full tank, and that a second input (46) of the third differential amplifier (44) is also connected to the oscillator (29).

11. Apparatus according to claim 9, characterised in that the output (41) of the measuring amplifier (31) and that (48) of the comparison amplifier (33) are connected each by way of a peak detector (42, 47) to the elements of the evaluating electronics (8) which follow.

12. Apparatus according to claim 10, characterised in that the output (41) of the measuring amplifier (31) and the tap of the voltage divider (56) are connected by way of a peak detector (59, 57) in each case each to one of the inputs (43, 46) of the third differential amplifier (44).

**Revendications**

1. Dispositif de mesurage capacitif de niveaux d'emplissage, en particulier dans un réservoir de véhicule automobile, comprenant un détecteur de mesurage équipé d'électrodes mesureuses (17, 18) formant un condensateur de mesurage (35) et dont l'espace intercalaire communique avec le fluide dont la hauteur d'emplissage à un instant considéré doit être mesurée; un canal parcourant intérieurement le détecteur de mesurage afin d'aspirer le fluide en hauteur; ainsi que des électrodes compensatrices (15, 16) pour former un condensateur de compensation (37) dans une branche d'aspiration dans laquelle le niveau du fluide est constant, lesdites électrodes compensatrices (15, 16) permettant de contrebalancer l'influence exercée sur le résultat du mesurage par des différences de constante diélectrique du fluide, dans un circuit d'interprétation auquel le condensateur de mesurage (35) et le condensateur de compensation (37) sont raccordés, dispositif caractérisé par le fait que les électrodes mesureuses (17, 18) formant le condensateur de mesurage (35) sont agencées concentriquement les unes par rapport aux autres; par le fait que le canal pour aspirer le fluide en hauteur se trouve à l'intérieur de l'électrode mesureuse interne (18); par le fait que les électrodes compensatrices (15, 16) sont logées dans un carter (1) dont le fond (3) se trouve à un niveau plus bas que l'orifice supérieur du canal situé à l'intérieur de l'électrode mesureuse interne (18), et qui est en communication par liquide avec ce canal, par l'intermédiaire d'un trop-plein (19); et par le fait qu'un tube (5) d'aspiration du fluide débouche dans la zone du fond du carter (1).

2. Dispositif selon la revendication 1, caractérisé par le fait qu'un conduit d'évent (6), débouchant dans le tube d'aspiration (5), s'étend vers le bas jusqu'au niveau (7) du fluide dans le carter.

3. Dispositif selon la revendication 1 ou 2, caractérisé par le fait que le fond (3) du carter s'étend à l'oblique en direction de l'orifice du tube d'aspiration (5).

4. Dispositif selon l'une des revendications 1 à 3, caractérisé par le fait que les électrodes mesureuses (17, 18) sont incorporées, en dépassant vers l'extérieur, dans le carter (1) constitué par une matière plastique.

5. Dispositif selon l'une des revendications 1 à 4, caractérisé par le fait que le carter (1) peut être obturé par un couvercle (2) consistant également en une matière plastique, matériau à partir duquel sont façonnés le tube d'aspiration (5) et, le cas échéant, le conduit d'évent (6).

6. Dispositif selon l'une des revendications 1 à 5, caractérisé par le fait que les électrodes mesureuses (17, 18) sont maintenues concentriquement les unes par rapport aux autres, à leur extrémité inférieure, par l'entremise d'un filtre cylindrique (24).

7. Dispositif selon la revendication 6, caractérisé par le fait qu'un orifice d'étranglement (28) est prévu dans un cylindre interne (26) sensiblement fermé du filtre (24), orifice par l'intermédiaire duquel l'espace intercalaire (22) entre les électrodes mesureuses (17, 18) est relié à l'espace interne dudit filtre.

8. Dispositif selon l'une des revendications 1 à 7, caractérisé par le fait que le circuit d'interprétation se présente sous la forme d'une électronique d'interpretation (8) et se trouve dans le carter (1), au-dessous du couvercle (2), ce circuit étant raccordé, par l'intermédiaire de contacts amovibles (9 à 13), aux électrodes mesureuses (17,18) et aux électrodes compensatrices (15,16).

9. Dispositif selon l'une des revendications 1 à 8, dans lequel l'électronique d'interprétation (8) comprend un amplificateur différentiel branché en rétroaction en tant qu'amplificateur de mesurage (31), avec le condensateur de mesurage (35) à une entrée; un amplificateur différentiel branché en retroaction en tant qu'amplificateur de comparaison (33), avec le condensateur de compensation (37) à une entrée; un troisième amplificateur différentiel (44), en liaison avec une sortie de l'amplificateur de mesurage (31) en vue d'alimenter un instrument d'affichage (45); ainsi qu'un oscillateur (29) pour alimenter respectivement une entrée de l'amplificateur de mesurage (31) et de l'amplificateur de comparaison (33), dispositif caractérisé par le fait qu'une première entrée respective (61 ou 32) de l'amplificateur de mesurage (31) et de l'amplificateur de comparaison (33) est directement raccordée à l'oscillateur (29); par le fait qu'une seconde entrée (36) de l'amplificateur de mesurage (31) est raccordée au condensateur de mesurage (35) et à un élément mesureur (39) de couplage rétroactif, relié à la sortie (41) de l'amplificateur de mesurage (31); par le fait qu'une seconde entrée (38) de l'amplificateur de comparaison (33) est raccordée au condensateur de compensation (37) et à un élément comparateur (40) de couplage rétroactif qui est relié à la sortie (48) de l'amplificateur de comparaison (33); par le fait que la sortie (48) de l'amplificateur de comparaison est en liaison avec une première entrée (49) d'un quatrième amplificateur différentiel (50) disposé dans une branche de couplage rétroactif gagnant une entrée de commande de l'oscillateur (29); et par le fait que l'oscillateur (29) alimente un circuit de commutation (34) établissant un équilibre entre l'électronique d'interprétation et le réservoir vide, circuit dont la sortie est respectivement raccordée à une seconde entrée (46 ou 51) des troisième et quatrième amplificateurs différentiels (44 ou 50).

10. Dispositif selon l'une des revendications 1 à 8, dans lequel l'électronique d'interprétation (8) comprend un amplificateur différentiel branché en rétroaction en tant qu'amplificateur de mesurage (31), avec le condensateur de mesurage (35) à une entrée; un amplificateur différentiel branché en rétroaction en tant qu'amplificateur de comparaison (33); un troisième amplificateur différentiel (44) dont une première entrée (43) est en liaison avec l'amplificateur de mesurage (31), et qui alimente un instrument d'affichage (45); ainsi qu'un oscillateur (29) pour alimenter une entrée de l'amplificateur de mesurage (31), dispositif caractérisé par le fait que l'oscillateur (29) est raccordé, par l'intermédiaire d'un condensateur de compensation (55) établissant l'équilibre entre l'electronique d'interprétation (8) et le reservoir vide, à une première entrée (36) de l'amplificateur de mesurage (31) qui est reliée à la masse par l'intermédiaire du condensateur de mesurage (35) et est branchée en rétroaction par l'intermédiaire du condensateur de comparaison (37); par le fait qu'une première entrée (32) de l'amplificateur de comparaison (33) est raccordée à l'oscillateur (29) par l'intermédiaire d'un diviseur (56) de tension, une seconde entrée (38) de l'amplificateur de comparaison (33) étant raccordée à la sortie (41) de l'amplificateur de mesurage (31); par le fait que la sortie de l'amplificateur de comparaison (33) est raccordée à la première entrée (36) de l'amplificateur de mesurage (31), par l'intermédiaire d'un condensateur de compensation (58) établissant l'équilibre entre l'électronique d'interprétation (8) et le réservoir plein; et par le fait qu'une seconde entrée (46) du troisième amplificateur différentiel (44) est également en liaison avec l'oscillateur (29).

11. Dispositif selon la revendication 9, caractérisé par le fait que la sortie (41) de l'amplificateur de mesurage (31) et celle (48) de l'amplificateur de comparaison (33) sont raccordées, par l'intermédiaire d'un détecteur de crêtes, respectif (42, 47), aux composants de l'électronique d'interprétation (8) branchés en aval.

12. Dispositif selon la revendication 10, caractérisé par le fait que la sortie (41) de l'amplificateur de mesurage (31) et la prise du diviseur de tension (56) sont raccordées, par l'intermédiaire d'un détecteur de crêtes respectif (59, 57) à l'une respective des entrées (43, 46) du troisième amplificateur différentiel (44).

# Fig. 1

# Fig. 2

# Fig. 3

Fig. 4

0 052 215